# EUROPEAN PATENT SPECIFICATION

(11) **EP 2 999 612 B1**
(45) Date of publication and mention of the grant of the patent: **12.07.2017**
(21) Application number: 14732290.3
(22) Date of filing: 19.05.2014
(51) Int. Cl.: B62B 3/10, B65F 1/14

(54) **TROLLEY WITH A RETRACTABLE SACK HOLDER**
HANDWAGEN MIT EINZIEHBAREM SACKHALTER
CHARIOT AVEC UN PORTE-SAC RETRACTABLE

(30) Priority: 20.05.2013 GB 201309013
(43) Date of publication of application: 30.03.2016
(73) Proprietor: Crisp Clean Services Limited, Langport, Somerset TA10 0PP (GB)
(72) Inventor: CRISP, John Frederick, Somerset TA1 3TF (GB); HUDSMITH, David Charles, Somerset BA5 1BY (GB)
(74) Representative: Craske, Stephen Allan
(86) International application number: PCT/GB2014/051531
(87) International publication number: WO 2014/188167

(56) References cited:
- EP-A2- 0 945 326
- DE-U1- 8 508 238
- DE-U1- 9 408 921
- US-A- 4 350 366

## Description

### TECHNICAL FIELD OF THE INVENTION

This invention relates to trolleys, e.g. cleaning trolleys.

### BACKGROUND

Wheel-mounted trolleys are often used to carry cleaning materials, mops, buckets etc. from one place to another. Such trolleys may include a holder for securing a plastic waste sack in an open configuration into which waste material can be placed during use of the trolley. The sack can be removed for disposal and replaced with an empty one when required.

Cleaning trolleys are often used to carry a considerable number of items, and it is generally desirable to make maximum use of the available space.

DE 94 08 921 U1 discloses a shopping trolley which falls within the preamble of Claim 1. More shopping trolleys are disclosed in DE 85 08 238 U1 and EP 0 945 326 A2**.**

The present invention seeks to provide a new and inventive form of trolley which includes a sack holder and which allows the available space within the trolley to be utilised to its maximum extent.

### SUMMARY OF THE INVENTION

The present invention is defined in claim 1 and proposes a trolley having a base supported on wheels, upright members upstanding from the base, and a retractable sack holder which includes a support frame, a lower portion of which is pivotally mounted for angular movement between retracted and extended positions of the sack holder, and a top frame for holding an open mouth of a sack suspended below the top frame and which is pivotally connected to a top portion of the support frame, in which the trolley includes a pair of runners supported from the upright members extending generally parallel to the base, and a rear edge of the top frame is engaged with the runners to travel along them as the sack holder moves between the retracted and extended positions. Preferred embodiments are defined in the dependent claims. As will be explained more fully below, the present arrangement minimises the angular movement of the top frame which allows the space within the trolley to be utilised more fully.

The invention also provides a retractable sack holder having a top frame engaged with runners which comprise flanges.

The invention also provides a retractable sack holder having a top frame, in which a rear edge of the top frame is provided with guides which travel along runners.

The invention also provides a retractable sack holder having a top frame, in which a rear edge of the top frame is provided with top guides which are engaged with an upper face of respective runners.

The invention also provides a retractable sack holder having a top frame, in which a rear edge of the top frame is provided with top and bottom guides engaged respectively with an upper and a lower face of a runner.

The invention also provides a retractable sack holder having a top frame, in which a rear edge of the top frame is provided with guides which comprise rollers engaged with runners.

The invention also provides a retractable sack holder having a top frame, in which a rear edge of the top frame is provided with two pairs of spaced rollers which travel along runners.

The invention also provides a retractable sack holder having a top frame and brackets fixed with the top frame.

The invention also provides a retractable sack holder having a top frame, in which a rear edge of the top frame is provided with guides carried by a pair of brackets which are fixed with the top frame.

The invention also provides a retractable sack holder having a support frame which includes a pair of mutually spaced and substantially parallel side members.

The invention also provides a retractable sack holder having a support frame and a top frame provided with fixed brackets which are pivotally connected to the support frame

The invention also provides a retractable sack holder having a top frame which carries pivotally mounted wire retainers for engagement with the open mouth of a sack.

### BRIEF DESCRIPTION OF THE DRAWINGS

The following description and the accompanying drawings referred to therein are included by way of non-limiting example in order to illustrate how the invention may be put into practice. In the drawings:
Figure 1 is a general partial view of a cleaning trolley provided with a retractable sack holder in accordance with the invention, with the sack holder shown extended for use;
Figure 2 is a more detailed view of a top part of the sack holder; and
Figure 3 is a similar view to Fig. 1 but showing the sack holder in a retracted or stowed position.

### DETAILED DESCRIPTION OF THE DRAWINGS

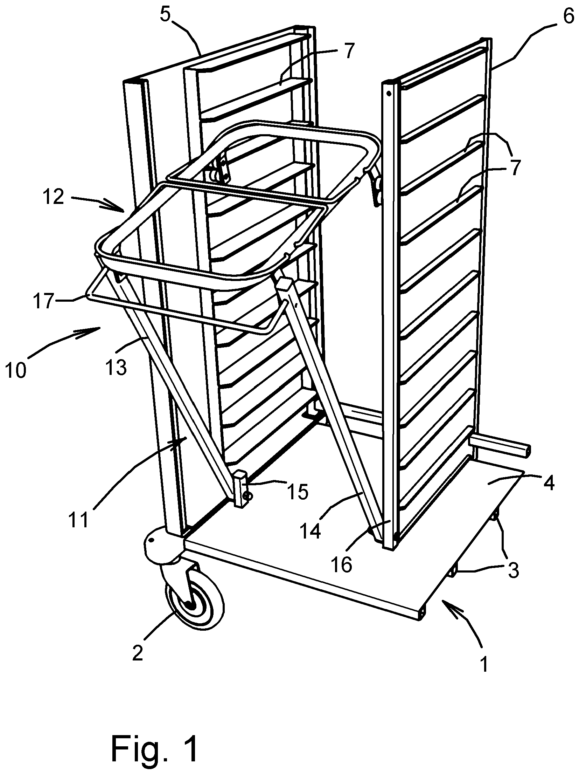

Referring firstly to **Fig. 1****,** the drawing shows part of a typical cleaning trolley, many examples of which can be found in the art. The trolley has a horizontal base 1 supported on typically four castor-type wheels 2. The base may be formed from metal box section members 3 of substantially square or rectangular cross-section, but the frame could also be formed of round tube and other materials such as or thermoplastics. In this example a base panel 4 of thermoplastics, GRP or other suitable material is fixed onto the box members 3, although the frame could remain open. Various upright members 5 and 6, which are typically composed of hollow box section and/or panels, are attached to the base 1 by screws, brackets or other suitable means known in the art. Again, the upright members could incorporate metal or thermoplastic box sections or round tube, and panels of thermoplastics, GRP etc. Various attachments may be secured to the upright members 5 and 6 as required. In this example the upright members support a series of vertically and horizontally spaced flanges 7, all extending substantially parallel to the base 1, which can be used to hold trays for carrying cleaning materials or other items.

In accordance with the present invention a retractable sack holder 10 is mounted between two spaced upright walls 5 and 6. The sack holder includes a support frame 11 and a top frame 12. The support frame 11 includes spaced parallel side members 13 and 14, the lower ends of which are pivotally mounted for angular movement parallel to the upright walls 5 and 6. One of the side members 13 is pivoted to a short post or bracket 15 upstanding from the base 1 and the other member 14 is pivoted to an upright box member 16 of the wall 6. The upper ends of the side members 13 and 14 are connected by a forwardly-projecting wire handle 17.

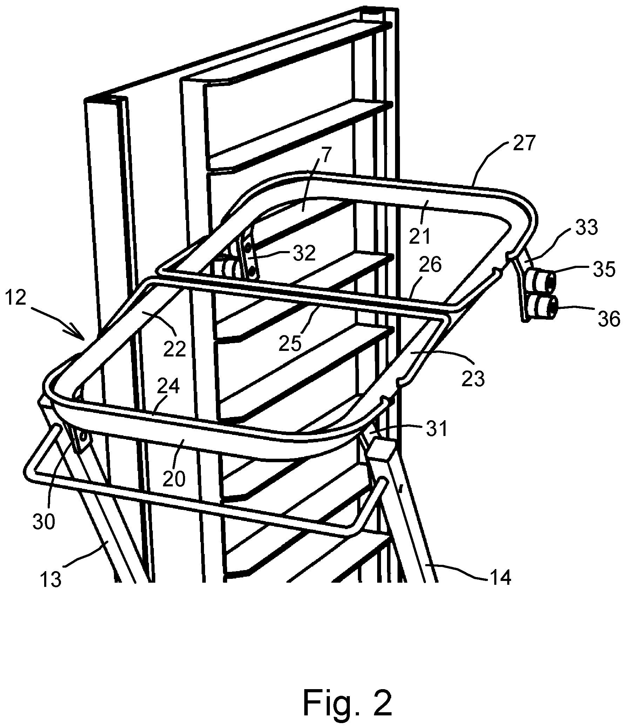

Referring to **Fig. 2****,** it can be seen that the top frame 12 is of substantially rectangular shape and is conveniently formed from round metal tube, providing parallel front and rear portions 20 and 21 and parallel side portions 22 and 23. Four U-shaped wire sack retainers 24-27 are pivotally connected to the top frame 12 for holding a sack or pair of plastic refuse sacks in known manner. The top edge of a sack can be folded over the two front retainers 24 and 25 to hold the mouth of the sack open with the sack suspended below the top frame 12. A further sack can be affixed to the rear retainers 26 and 27 in a similar manner. Alternatively the two middle retainers 25 and 26 can be sprung out of their apertures in the outer face of the frame 12 so that a single sack can be inserted and held by the retainers 24 and 27.

A pair of downwardly-extending brackets 30 and 31 are fixed to the side portions 22 and 23 at the front of the top frame 12, and these brackets are in turn pivotally connected to to the opposing inside faces of the respective side members 13 and 14. A pair of similar brackets 32 and 33 are fixed to the rear of the side portions 22 and 23, but these each carry a pair of spaced rollers 35 and 36. Each pair of rollers 35 and 36 is engaged with the upper and lower surfaces of a respective flange 7, affixed to the upright walls 5 and 6, so that the rear end of the frame 12 is guided along the flanges 7 which thus act as runners for the rollers 35 and 36.

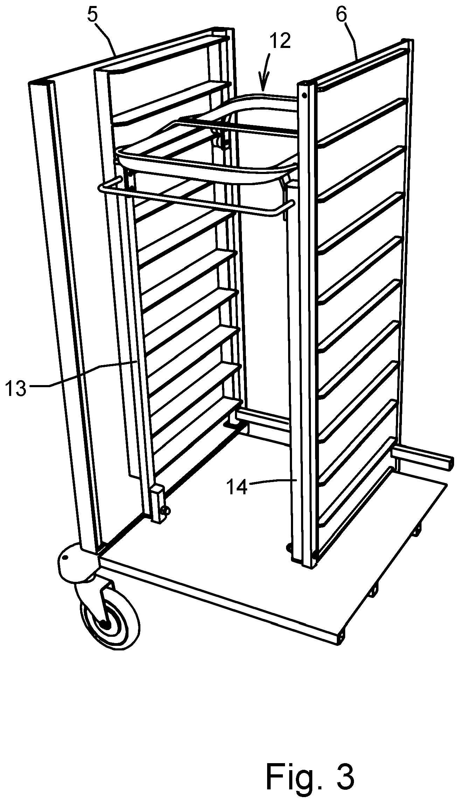

When the sack holder 10 is in the extended position shown in **Fig.s 1** **and** **2** the top frame 12 is inclined downwardly and outwardly from the trolley so that the open mouth of the sack or sacks is easily accessible. On the other hand, as shown in **Fig. 3****,** when the sack holder is in its retracted or stowed position with the side members 13 and 14 substantially vertical the top frame 12 is disposed in a substantially horizontal position between the walls 5 and 6.

The arrangement described above has a number of advantages. Firstly, when the sack holder 10 is pivoted between the extended and retracted positions there is a relatively small amount of vertical movement at the rear, or inward, end of the top frame, which permits the space above the sack holder to be utilised to the full. For example, one or more storage trays can be placed on the flanges 7 immediately above the sack holder. A further significant advantage is that the change in angle of the top frame 12 is relatively small, remaining closer to the horizontal position. It is therefore possible to fill the sacks to a greater extent, increasing waste collection efficiency and reducing the risk that the contents might spill out when the sack holder is extended.

Although the use of rollers is described above it would be possible to use any suitable kind of low friction guides engaged with the runners. Furthermore, since the weight of the top frame and any contents of the sack will tend to hold the top rollers or guides in engagement with the runners, the lower rollers or guides could be omitted in some circumstances.

## Claims

1. A trolley having a base (1) supported on wheels (2), upright members (5, 6) upstanding from the base, and a retractable sack holder (10) which includes a support frame (11), a lower portion of which is pivotally mounted for angular movement between retracted and extended positions of the sack holder, and a top frame (12) which is pivotally connected to a top portion of the support frame, in which the trolley includes a pair of runners (7) extending generally parallel to the base (1), and a rear edge of the top frame (12) is engaged with the runners to travel along them as the sack holder moves between the retracted and extended positions, **characterised in that**
- the top frame (12) is for holding an open mouth of a sack suspended below the top frame, and
- the pair of runners (7) is supported from the upright members (5, 6).

2. A trolley according to Claim 1 in which the runners (7) comprise flanges.

3. A trolley according to Claim 1 in which the rear edge of the top frame is provided with guides (35, 36) which travel along the runners (7).

4. A trolley according to Claim 3 in which the guides comprise a top guide (35) which is engaged with an upper face of each runner (7).

5. A trolley according to Claim 3 in which the guides comprise top and bottom guides (35, 36) engaged respectively with an upper and a lower face of each runner (7).

6. A trolley according to Claim 4 in which the guides (35) comprise rollers.

7. A trolley according to Claim 5 in which the guides (35, 36) comprise rollers.

8. A trolley according to Claim 3 in which the guides (35, 36) are carried by a pair of brackets (32, 33) which are fixed with the top frame (12).

9. A trolley according to Claim 1 in which the support frame (11) includes a pair of mutually spaced and substantially parallel side members (13, 14).

10. A trolley according to Claim 9 in which the top frame (12) is provided with fixed brackets (30, 31) which are pivotally connected to the inside faces at the upper ends of the side members (13, 14).

11. A trolley according to Claim 1 in which the top frame (12) carries pivotally mounted wire retainers (24-27) for engagement with the open mouth of a sack.

## Patentansprüche

1. Handwagen mit einer Basis (1), die von Rädern (2) getragen wird, aufrechten Teilen (5, 6), die von der Basis nach oben vorstehen, und einem einziehbaren Sackhalter (10), der einen Tragrahmen (11), von dem eine untere Region schwenkbar gelagert ist zur Schwenkbewegung zwischen der eingezogenen und der ausgestellten Stellung des Sackhalters, und einen Oberrahmen (12) aufweist, der schwenkbar mit einer oberen Region des Tragrahmens verbunden ist, wobei der Handwagen ein Paar von Schienen (7) aufweist, die sich allgemein parallel zu der Basis (1) erstrecken, und wobei eine hintere Kante des Oberrahmens (12) an den Schienen angreift, um sich daran entlang zu bewegen, wenn der Sackhalter sich zwischen den eingezogenen und ausgestellten Stellungen bewegt, **dadurch gekennzeichnet, dass**
- der Oberrahmen (12) dazu dient, eine offene Sacköffnung aufgehängt unter dem Oberrahmen zu halten, und
- das Paar von Schienen (7) von den aufrechten Teilen (5, 6) getragen wird.

2. Handwagen nach Anspruch 1, wobei die Schienen (7) Flansche aufweisen.

3. Handwagen nach Anspruch 1, wobei die hintere Kante des Oberrahmens mit Führungen (35, 36) versehen ist, die an den Schienen (7) entlanglaufen.

4. Handwagen nach Anspruch 3, wobei die Führungen eine obere Führung (35) aufweisen, die an einer oberen Oberfläche jeder Schiene (7) anliegen.

5. Handwagen nach Anspruch 3, wobei die Führungen obere bzw. untere Führungen (35, 36) aufweisen, die an einer oberen bzw. einer unteren Oberfläche jeder Schiene (7) anliegen.

6. Handwagen nach Anspruch 4, bei dem die Führungen (35) Rollen aufweisen.

7. Handwagen nach Anspruch 5, bei dem die Führungen (35, 36) Rollen aufweisen.

8. Handwagen nach Anspruch 3, bei dem die Führungen (35, 36) durch ein Paar von Halterungen (32, 33) getragen werden, die an dem Oberrahmen (12) fixiert sind.

9. Handwagen nach Anspruch 1, bei dem der Tragrahmen (11) ein Paar von auf Abstand zueinander liegenden und im Wesentlichen parallelen Seitenteilen (13, 14) aufweist.

10. Handwagen nach Anspruch 9, bei dem der Oberrahmen (12) mit daran fixierten Halterungen (30, 31) versehen ist, die drehbar mit den Innenseiten an den oberen Enden der Seitenteile (13, 14) befestigt sind.

11. Handwagen nach Anspruch 1, bei dem der Oberrahmen (12) schwenkbare Klemmbügel (24/27) zum Erfassen der offenen Sacköffnung trägt.

## Revendications

1. Chariot ayant une base (1) supportée par des roues (2), des éléments verticaux (5, 6) s'étendant vers le haut à partir de la base, et un porte-sac rétractable (10) qui comprend un cadre de support (11), dont une partie inférieure est montée de manière pivotante pour un déplacement angulaire entre les positions rétractée et déployée du porte-sac, et un cadre supérieur (12) qui est relié de manière pivotante à une partie supérieure du cadre de support, le chariot comprenant une paire de glissières (7) s'étendant généralement parallèlement à la base (1), et un bord arrière du cadre supérieur (12) est engagé avec les glissières pour se déplacer le long de celles-ci lorsque le porte-sac se déplace entre les positions rétractée et déployée, **caractérisé par le fait que** :
- le cadre supérieur (12) est destiné à tenir une ouverture ouverte d'un sac suspendue au-dessous du cadre supérieur, et
- la paire de glissières (7) est supportée à partir des éléments verticaux (5, 6).

2. Chariot selon la revendication 1, dans lequel les glissières (7) comprennent des rebords.

3. Chariot selon la revendication 1, dans lequel le bord arrière du cadre supérieur est muni de guides (35, 36) qui se déplacent le long des glissières (7).

4. Chariot selon la revendication 3, dans lequel les guides comprennent un guide supérieur (35) qui est engagé avec une face supérieure de chaque glissière (7).

5. Chariot selon la revendication 3, dans lequel les guides comprennent des guides supérieur et inférieur (35, 36) engagés respectivement avec une face supérieure et une face inférieure de chaque glissière (7).

6. Chariot selon la revendication 4, dans lequel les guides (35) comprennent des roulettes.

7. Chariot selon la revendication 5, dans lequel les guides (35, 36) comprennent des galets.

8. Chariot selon la revendication 3, dans lequel les guides (35, 36) sont portés par une paire de ferrures (32, 33) qui sont fixées avec le cadre supérieur (12).

9. Chariot selon la revendication 1, dans lequel le cadre de support (11) comprend une paire d'éléments latéraux (13, 14) mutuellement espacés et sensiblement parallèles.

10. Chariot selon la revendication 9, dans lequel le cadre supérieur (12) est muni de ferrures fixes (30, 31) qui sont reliées de manière pivotante aux faces intérieures au niveau des extrémités supérieures des éléments latéraux (13, 14).

11. Chariot selon la revendication 1, dans lequel le cadre supérieur (12) porte des organes de retenue de câble (24-27) montés de manière pivotante, pour engagement avec l'ouverture ouverte d'un sac.
